Europäisches Patentamt

European Patent Office

Office européen des brevets

(11) Numéro de publication: **0 252 792**
**A1**

(12) # DEMANDE DE BREVET EUROPEEN

(21) Numéro de dépôt: **87401386.5**

(22) Date de dépôt: **19.06.87**

(51) Int. Cl.⁴: **B 65 B 7/16**

(30) Priorité: **09.07.86 FR 8609995**

(43) Date de publication de la demande:
**13.01.88 Bulletin 88/02**

(84) Etats contractants désignés:
**CH DE ES GB IT LI**

(71) Demandeur: **Robache, Roger**
**8, rue Lucien Leuwen**
**F-75020 Paris (FR)**

(72) Inventeur: **Robache, Roger**
**8, rue Lucien Leuwen**
**F-75020 Paris (FR)**

(74) Mandataire: **Tony-Durand, Serge**
**Cabinet Tony-Durand 22, Boulevard Voltaire**
**F-75011 Paris (FR)**

(54) **Machine pour la fermeture d'une barquette, ou autre récipient de conditionnement, par soudure d'un film en matière thermoplastique sur les bords d'un tel récipient.**

(57) Machine de conditionnement pour la fermeture d'une barquette de conditionnement ou similaire par soudure d'un film en matière thermo-plastique sur les bords de celle-ci.

Cette machine comporte deux postes successifs de travail, à savoir : un poste (3) de soudure du film de fermeture (2) sur une barquette de conditionnement (1) et un poste (4) de découpe de ce film autour des bords d'une telle barquette. Pour le déplacement de chaque barquette entre ces deux postes de travail, il est prévu un simple plateau de glissement (12) s'étendant entre ces deux postes, un autre plateau fixe de réception (11) étant situé à l'endroit du poste de soudure (3). De plus, de part et d'autre du plateau de glissement (12), sont disposés des moyens de préhension et d'entraînement des bords du film de fermeture (2). Ainsi l'entraînement de chaque barquette entre les deux postes de travail est assuré par la traction exercée sur elle par le film de fermeture. Enfin, un convoyeur (13) d'entraînement est disposé à l'endroit du poste de découpe (4) ainsi qu'au-delà de celui-ci, pour évacuer chaque barquette de conditionnement (1) hors de la machine après qu'elle ait été séparée du film de fermeture (2).

Cette machine peut être utilisée pour la fermature de barquettes et autres récipients de conditionnement contenant diverses sortes de produits.

FIG.1

## Description

"Machine pour la fermeture d'une barquette, ou autre récipient de conditionnement, par soudure d'un film en matière thermo-plastique sur les bords d'un tel récipient"

La présente invention concerne les machines de conditionnement destinées à assurer la fermeture d'une barquette, ou autre récipient de conditionnement, par soudure d'un film en matière thermo-plastique sur les bords de celle-ci. Ces machines sont utilisées pour fermer de tels récipients après remplissage de ceux-ci. Ce mode de conditionnement est utilisé plus particulièrement pour des produits alimentaires, par exemple des pâtés ou autres produits de charcuterie, ou bien encore pour des plats cuisinés.

Les machines employées actuellement à cet effet comportent deux postes successifs de travail, à savoir : un poste de soudure du film de fermeture sur une barquette de conditionnement préalablement remplie et un poste de découpe du film autour des bords d'un telle barquette. Pour le déplacement de chaque barquette de conditionnement entre ces deux postes de travail, il est prévu des moyens d'entraînement aptes à assurer le déplacement de chaque barquette sur toute la longueur de la machine, ainsi que son évacuation ultérieure après découpe du film de fermeture. Quant à celui-ci, il est lui-même dévidé sur toute la longueur de la machine en regard du parcours des barquettes de conditionnement, et ce à partir d'une bobine d'alimentation.

Dans certaines machines de ce genre, les moyens d'entraînement des barquettes de conditionnement consistent en un convoyeur à bande ou similaire, qui d'étend sur toute la longueur de la machine et avance pas à pas pour transférer chaque barquette du poste de soudure au poste de découpe, ce convoyeur pouvant être réalisé en plusieurs parties. En conséquence, le dispositif d'introduction des barquettes à l'intérieur de la machine est conçu pour assurer la mise en place de chacune de celles-ci sur ce convoyeur. Cependant, il est apparu à l'usage que cette solution présente des inconvénients importants. En effet, il se produit fréquemment un glissement plus ou moins important des barquettes sur le convoyeur. Ce glissement peut être dû notamment au fait que lors du conditionnement de produits alimentaires de charcuterie ou de plats cuisinés, le convoyeur est très rapidement souillé par de la graisse ou des liquides. Or un tel glissement des barquettes a pour conséquence qu'il se produit un défaut de synchronisation entre le déplacement de ces barquettes et le fonctionnement du poste de découpe.

Dans d'autres modèles de machines destinées au même usage, les moyens d'entraînement des barquettes de conditionnement consistent en deux peignes latéraux qui sont aptes à saisir les barquettes à déplacer, et qui sont animés d'un mouvement alternatif assurant un avancement pas à pas de celles-ci. Toutefois, cette solution entraine une complication importante des machines correspondantes et par suite une augmentation de leur prix de revient. Par ailleurs, elle présente l'inconvénient de nécessiter un agencement particulier des peignes latéraux d'entraînement pour que ceux-ci puissent recevoir des barquettes de dimensions différentes.

C'est pourquoi la présente invention a pour but de réaliser une machine susceptible d'effectuer le même travail, mais qui est conçue de façon à éviter les inconvénients des machines mentionnées ci-dessus.

A cet effet, cette machine est caractérisée en ce que :
- pour le déplacement de chaque barquette de conditionnement entre les deux postes de travail, il est prévu un simple plateau de glissement s'étendant entre ces deux postes, un autre plateau fixe de réception étant situé à l'endroit du poste du soudure pour recevoir chaque barquette lors de son introduction dans la machine ;
- de part et d'autre du plateau de glissement, son disposés des moyens de préhension et d'entraînement des bords du film de fermeture, qui est ultérieurement reçu sur une bobine réceptrice prévue à la sortie de la machine, de sorte que l'entraînement de chaque barquette entre les deux postes de travail est assuré par la traction exercée par le film de fermeture ;
- ces différents moyens d'entraînement étant synchronisés entre eux pour que chaque barquette de conditionnement avance pas à pas et stationne pendant le temps voulu à l'endroit de chaque poste de travail.

Ainsi, le déplacement de chaque barquette de conditionnement entre les deux postes de travail est assuré par la traction exercée par le film de fermeture à partir du moment ou celui-ci a été rendu solidaire d'un telle barquette du fait de sa soudure sur les bords de celle-ci. En conséquence, il ne risque pas de se produire un défaut d'entraînement des barquettes de conditionnement entre les deux postes de travail, car le film de fermeture est accouplé mécaniquement avec les moyens d'entraînement prévus sur chaque côté de la machine. De plus, cette solution a pour avantage qui la présente machine présente une structure beaucoup plus simple que les machines antérieures dans lesquelles il était prévu des peignes latéraux d'entraînement animés d'un mouvement alternatif.

De préférence, les moyens de préhension et d'entraînement des bords du film de fermeture consistent, sur chaque côté de cette machine, en une chaine ou similaire qui est fermée sur elle-même et porte une série de moyens d'accouplement avec le bord correspondant du film de fermeture, ces moyens d'accouplement pouvant consister par exemple en des picots pointus aptes à pénétrer dans le bord du film de fermeture ou en des pinces aptes à saisir ce bord.

Ainsi, il est totalement exclu qu'il puisse se produire un glissement relatif intempestif entre les bords du film de fermeture et les moyens latéraux d'entraînement de celui-ci.

Cependant, d'autres particularités et avantages de la présente machine apparaitront au cours de la description suivante d'un exemple de réalisation de celle-ci. Cette description est donnée en référence au dessin annexé à simple titre indicatif, et sur lequel :

La figure 1 est une vue schématique en coupe longitudinale d'une machine selon l'invention.

La figure 2 est une vue en coupe transversale selon la ligne III-III de la figure 1, à échelle différente.

La figure 3 est une vue en plan de dessus d'un fragment d'un film de fermeture, tel que récupéré à la sortie de la présente machine, cette vue étant à une échelle différente des précédentes.

Comme déjà indiqué, la présente machine est destinée à assurer la fermeture de barquettes 1 de conditionnement, ou récipients similaires, par soudure d'un film 2 en matière plastique sur les bords d'un tel récipient. Il s'agit en l'occurrence de barquettes rigides, ou récipients similaires de conditionnement, moulés en une matière thermo-plastique de nature telle qu'il soit ensuite possible de souder le film 2 en matière thermo-plastique.

La présente machine comporte deux postes successifs distincts de travail, à savoir :
- un poste 3 de soudure du film de fermeture 2 sur les bords d'une barquette 1 de conditionnement,
- et un poste 4 de découpe de ce film autour des bords d'un telle barquette.

Le premier de ces postes, en l'occurrence le poste 1 de soudure, est prévu à une faible distance de l'extrémité 5 d'entrée des barquettes de conditionnement dans la machine. Quant au poste de découpe 4, il est situé à une faible distance de l'extrémité de sortie 6 de ces mêmes barquettes. A l'endroit de l'extrémité d'entrée, il est prévu un plateau fixe 7 destiné à recevoir chaque barquette de conditionnement 1 sur laquelle doit être rapportée une feuille de fermeture constituée par un fragment du film 2. Un tiroir coulissant 9 susceptible d'être manoeuvré à la main au moyen d'un poignée 10 permet d'introduire chacune de ces barquettes à l'intérieur de la machine par glissement sur le plateau 7. Cependant, il va de soi qu'il serait possible de prévoir, à la place d'un tel dispositif manuel d'introduction, un dispositif d'alimentation automatique susceptible d'acheminer les barquettes les unes à la suite des autres, à la cadence voulue. Bien entendu, dans l'un et l'autre cas ces barquettes ont été préalablement remplies du produit qui doit être conditionné dans celles-ci, par exemple un produit alimentaire.

Le plateau de glissement 7 se termine juste en regard du poste de soudure 3. Au même niveau que ce plateau, ce poste comporte lui-même un autre plateau fixe 11 destiné à recevoir chaque barquette 1 lors de son stationnement à l'endroit de ce poste.

A la suite de ce plateau 11, il est prévu un autre plateau de glissement 12, situé au même niveau, et qui s'étend entre le poste de soudure 3 et le poste le découpe 4. Ce plateau permet le transfert des barquettes 1 d'un poste à l'autre par simple glissement sur celui-ci sous l'effet de la traction exercée sur ces barquettes par le fim de fermeture, ainsi qu'il sera expliqué par la suite.

Toujours au même niveau que les différents plateaux 7, 11 et 12, il est ensuite prévu un convoyeur à bande 13 qui sera décrit plus en détail ci-après et qui est destiné à assurer ensuite l'évacuation des barquettes en dehors de la machine. En conséquence, celles-ci se déplace sur toute la longueur de cette machine sur un même plan horizontal.

Quant au film de fermeture 2, il est dévidé d'une bobine débitrice 14, située à l'entrée de la machine, pour être récupéré sur une bobine réceptrice 15 disposée à la sortie de celle-ci. La première de ces bobines est librement rotative, ou légèrement freinée. Par contre, la bobine réceptrice est entraînée en rotation par des moyens d'entraînement appropriés. Par l'intermédiaire de rouleaux ou galets de renvoi 16 et 17, situés respectivement à l'entrée et à la sortie de la machine, la partie intermédiaire 2a du film 2 est maintenue tendue horizontalement en regard des plateaux successifs 7, 11 et 12 de glissement des barquettes 1, et ce au niveau du bord supérieur de ces barquettes.

De part et d'autre des deux postes de travail 3 et 4 de la machine et du plateau intermédiaire 12 de glissement, il est prévu des moyens d'entraînement aptes à assurer un entraînement positif de la partie correspondante 2a du film 2, c'est-à-dire un entraînement mécanique excluant toute possibilité de glissement de ce film.

Les moyens d'entraînement ainsi prévus, sur chaque côté de la machine consistent avantageusement en une chaine 18 fermée sur elle-même et qui porte une série de moyens d'accouplement mécaniques avec le bord correspondant du film 2, cette chaine passant sur des pignons d'entraînement et/ou de renvoi 20 qui sont prévus aux extrémités. L'avance des deux chaines latérales d'entraînement est assurée par un mécanisme de commande à Croix de Malte, apte à leur assurer une avance intermittente d'une distance déterminée dans les conditions précisées par la suite.

Dans l'exemple représenté, les moyens d'accouplement entre les chaines latérales d'entraînement et les bords du film 2 de fermeture consistent en une série de picots pointus 19 portés par ces chaines et aptes à pénétrer dans les bords correspondants de ce film. De plus, le rouleau ou les galets 16 de renvoi du film 2, qui sont prévus près de l'entrée de la machine, portent une garniture en caoutchouc ou autre matière appropriée et ils sont agencés pour presser les bords de ce film sur les chaines latérales 18 afin de faire pénétrer les picots 19 à l'intérieur de ce film. Ceci permet d'obtenir un accouplement mécanique des chaines d'entraînement 18 avec les bords du film 2 sans aucune possibilité de glissement. Bien entendu, il convient que la largeur du film 2 soit notablement plus grande que celles des barquettes 1 à fermer de façon à laisser subsister, de part et d'autre de chaque barquette, une marge suffisante de film dans laquelle peuvent pénétrer les picots 19 des chaines d'entraînement 18.

Cependant les picots ainsi prévus peuvent être remplacés par d'autres moyens susceptibles d'assurer un accouplement mécanique entre les chaines latérales 18 d'entrainement et les bords du film de fermeture. Ces moyens d'accouplement pourraient éventuellement consister en une série de pinces aptes à serrer les bords du film de fermeture.

Le poste 3 de soudure comprend deux éléments complémentaires aptes à constituer une enceinte étanche permettant de réaliser une soudure sous vide ou sous gaz neutre, à savoir une cuve inférieure 21 et une cloche supérieure 22. Cette dernière est montée de façon fixe sur le bâti 8 de la machine, et elle renferme une tête mobile 23 de soudure. Cette dernière est actionnée hydrauliquement grâce à un piston 24 disposé à l'intérieur d'une chambre de commande 25. En regard d'un rebord périphérique 26 de la barquette 1a de conditionnement, qui se trouve placée dans le poste de soudure, la tête mobile de soudure 23 comporte un rebord de soudure 27. Par ailleurs, cette tête de soudure renferme des résistances électriques 28 de chauffage. Enfin, une canalisation 29 est branchée sur la cloche 22 pour assurer une mise sous vide de l'intérieur de celle-ci.

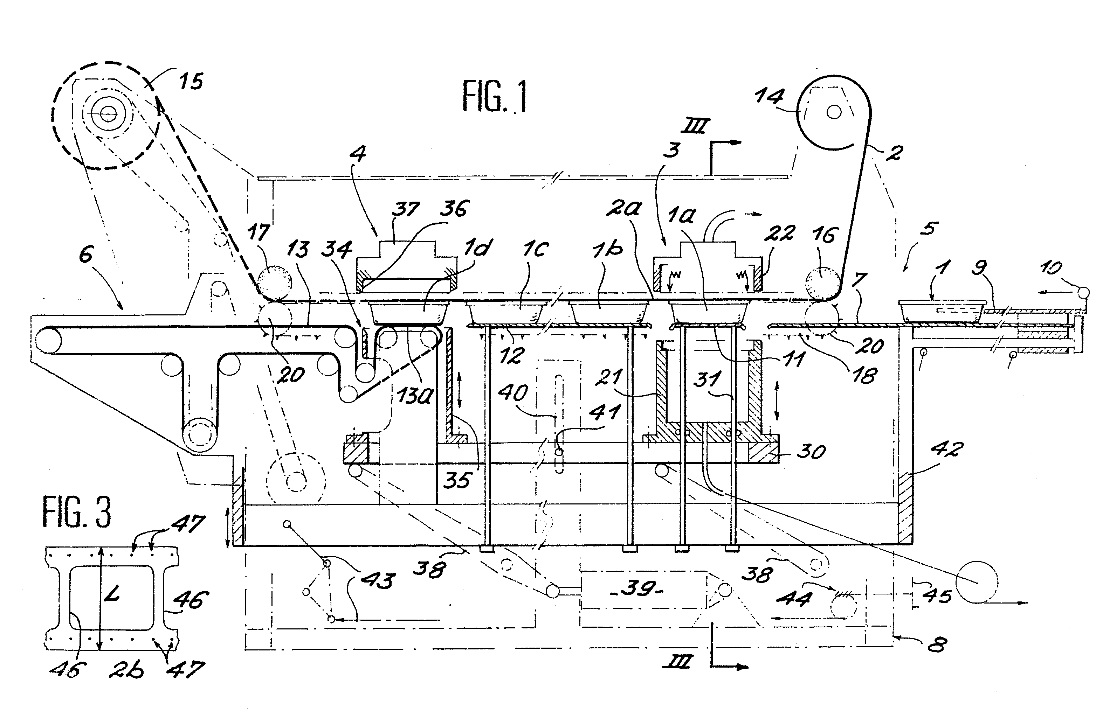

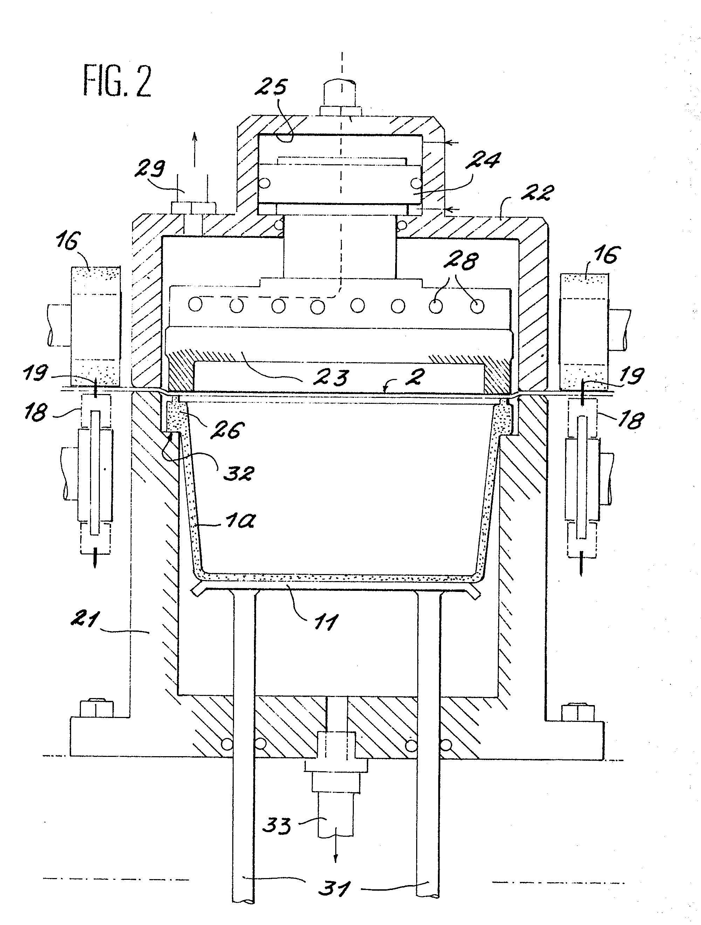

Quant à la cuve inférieure 21, elle est fixée sur un support mobile 30 de façon à pouvoir se déplacer verticalement entre une position inférieure de repos représentée à la figure 1 et une position supérieure de travail illustrée à la figure 2. Dans ces conditions, le plateau fixe 11 est porté par des colonnes verticales 31 qui traversent le fond de la cloche 21 de façon étanche grace à des joints d'étanchéité appropriés. Le bord supérieur de la cuve 21 comporte, sur sa face interne, un épaulement 32 apte à servir de surface d'appui pour le rebord périphérique 26 de la barquette 1a lors de l'opération de soudure du film de fermeture (voir figure 2). Enfin, une canalisation d'aspiration 33 est branchée sur la cuve 21 pour en assurer la mise sous vide avant exécution d'une soudure.

Le poste de découpe 4 est essentiellement constitué par deux éléments complémentaires formant couteaux et qui sont aptes à coopérer pour assurer la découpe du film 2 autour des bords d'une barquette de conditionnement 1d se trouvant disposée à l'endroit de ce poste. Le premier de ces éléments consiste en un couteau annulaire 34 porté par une embase 35 fixée sur le support mobile 30 qui porte par ailleurs la cuve inférieure 21 du poste de soudure. Ainsi, ce couteau est susceptible de se déplacer dans le sens vertical entre une position inférieure de repos représentée à la figure 1 et une position supérieure de travail qui n'est pas illustrée sur les dessins annexés. Quant au second élément de ce poste de découpe, il consiste en un couteau annulaire complémentaire 36 porté par une tête fixe 37 renfermant des résistances électriques de chauffage.

Le plateau intermédiaire 12 de glissement se termine juste en regard du poste 4 de découpe. Cependant, à l'endroit de ce poste, il est prévu un convoyeur susceptible d'une part de servir de support à une barquette 1b durant l'opération de découpe et d'autre part, d'assurer l'évacuation ultérieure de celle-ci après cette opération. Dans l'exemple représenté, ce convoyeur consiste en une extension 13a du convoyeur 13 prévu à la sortie de la machine. Cependant, il serait également possible de prévoir un convoyeur distinct à l'endroit du poste de découpe.

Le support mobile 30 est actionné par des moyens d'entraînement assurant son relèvement pour réaliser simultanément une opération de soudure sur une barquette 1a et une opération de découpe sur une autre barquette 1d après que ces barquettes aient été acheminées à l'endroit des deux postes correspondants. A cet effet, dans l'exemple représenté, ce support 30 est monté sur deux bielles 38 dont l'une est actionnée par un vérin 39. Par ailleurs, le support 30 est guidé dans ses déplacements par deux glissières verticales fixes 40 à l'intérieur desquelles coulissent des ergots 41 portés par les côtés de ce support.

De façon à permettre l'utilisation de la présente machine pour la fermeture de barquettes de conditionnement ayant une hauteur plus ou moins grande, les différents plateaux de glissement de ces barquettes et le convoyeur d'évacuation ne sont pas fixés directement sur le bâti 8 de la machine, mais sur un châssis 42 monté mobile dans le sens vertical sur celui-ci. Le réglage de la position en hauteur de ce châssis peut être effectué par l'intermédiaire de moyens de commande appropriés, par exemple des bielles et biellettes 43 actionnées par l'intermédiaire d'un système 44 d'entraînement à vis sans fin, lui-même commandé par une manivelle 45. Ainsi, il est possible de modifier la position en hauteur des plateaux de glissement des barquettes 1 et du convoyeur final 13 en fonction de la hauteur des barquettes correspondantes.

Bien entendu, les différents moyens d'entraînement prévus dans la présente machine sont synchronisés de façon à assurer l'avancement pas à pas de chaque barquette 1 avec un temps de stationnement approprié de chacune d'entre elles, respectivement à l'endroit du poste de soudure 3, puis à l'endroit du poste de découpe 4, une ou plusieurs positions intermédiaires de stationnement étant prévues sur la plateau 12, par exemple trois. La synchronisation est telle que le fonctionnement du poste de soudure et celui du poste de découpe ont lieu pendant le temps de stationnement de deux barquettes à l'endroit de l'un et l'autre de ces deux postes. Quant à l'avance intermitente des chaines d'entrainement, elle est toujours constante et elle est telle qu'elle amène chaque barquette exactement à l'endroit du poste de soudure, puis à l'endroit du poste de découpe, avec entre temps des positions intermédiaires d'arrêt.

Le déclenchement d'un cycle de fonctionnement peut être assuré par un contact actionné par chaque barquette 1 lors de son introduction dans la machine et de sa mise en place sur le plateau 11 de réception du poste de soudure. Ceci déclenche l'exécution de la soudure du film de fermeture sur la barquette correspondante 1a et la découpe de ce même film autour de la barquette 1d qui se trouve alors située à l'endroit du poste de découpe. Puis après achèvement de ces deux opérations et redescente du support mobile 30, la barquette 1a, qui est désormais solidarisée avec le film de soudure 2 du fait de l'opération de soudure, se trouve entraînée en avant par celui-ci jusque dans la première position intermédiaire 1b située sur le plateau de glissement 12 (voir figure 1). La machine s'arrête alors jusqu'à ce qu'une autre barquette 1 soit amenée dans la position 1a sur le plateau 11 de réception du poste de soudure. Cependant, ainsi qu'il a déjà été indiqué, l'introduction des barquettes peut être assurée par un dispositif automatique d'alimentation, auquel cas la machine peut fonctionner de façon continue en synchronisme avec ce dispositif d'alimentation.

Le principal avantage de la machine selon l'invention réside dans le fait que le transfert de chaque barquette de conditionnement, entre le poste de soudure et le poste de découpe, est assuré sous l'effet de la traction exercée par le film 2 et par simple glissement sur le plateau intermédiaire 12. En conséquence, il ne peut se produire aucun défaut de synchronisme de fonctionnement puisque le film 2 est lui-même accouplé de façon mécanique, et sans possibilité de glissement, avec les moyens prévus pour son entraînement. Ceci élimine donc radicalement les inconvénients observés sur les machines antérieures du même genre dans lesquelles le déplacement des barquettes est assuré par un convoyeur à bande.

A ce sujet, il convient de noter que dans la machine selon l'invention, le convoyeur 13 et son extension 13a ont simplement pour fonction d'assurer l'évacuation des barquettes de conditionnement après l'opération de découpe et leur évacuation en dehors de la machine. En effet, après cette opération la partie résiduelle du film 2 est rendu indépendant de la barquette 1d se trouvant à l'endroit du poste de découpe. En conséquence, cette dernière ne peut plus être entraînée en avant par ce film. Cependant, son entrainement est désormais assuré par le convoyeur 13 et l'extension 13a. Quant à la partie résiduelle du film 2, elle s'enroule sur la bobine réceptrice et motrice, qui est prévue à la sortie. La partie correspondante 2b de ce film présente alors une succession de larges ouvertures 46 qui correspondent chacune à la portion découpée dans ce film pour constituer une feuille de fermeture d'une barquette de conditionnement 1. Bien entendu, les bords de ce film présentent par ailleurs des trous 47 correspondant aux points de pénétration des picots 19 des chaines d'entraînement 18.

La présente machine peut être conçue pour assurer la fermeture simultanée de plusieurs barquettes de conditionnement placées côte à côte. Dans un tel cas, il convient simplement que le poste de soudure et le poste de découpe soient agencés en conséquence.

Par ailleurs, il va de soi que cette machine n'est par limitée au seul exemple de réalisation décrit. Ainsi, le poste de découpe pourrait être réalisé différemment. En effet, au lieu de couteaux annulaires complémentaires, il serait possible de prévoir des couteaux circulaires rotatifs disposés en rectangle autour de l'emplacement d'une barquette de conditionnement 1d à l'endroit du poste de découpe. Mais de nombreuses autres modifications et variantes de réalisation peuvent être envisagées.

Comme déjà indiqué, la présente machine peut être utilisée pour assurer la fermeture de barquettes de conditionnement, ou autres récipients similaires, contenant diverses sortes de produits, par exemple des produits alimentaires.

## Revendications

1. Machine de conditionnement pour la fermeture d'une barquette de conditionnement ou similaire par soudure d'un film en matière thermo-plastique sur les bords de celle-ci, comportant deux postes successifs de travail, à savoir : un poste de soudure du film de fermeture sur une barquette de conditionnement et un poste de découpe de ce film autour des bords d'une telle barquette, ainsi que des moyens mécaniques d'entraînement de ces barquettes à l'intérieur de cette machine, caractérisée en ce que :

- pour le déplacement de chaque barquette de conditionnement (1) entre les deux postes de travail (3 et 4), il est prévu un simple plateau de glissement (12) s'étendant entre ces deux postes, un autre plateau fixe de réception (11) étant situé à l'endroit du poste de soudure (3) pour recevoir chaque barquette lors de son introduction dans la machine ;

- de part et d'autre du plateau de glissement (12), sont disposés des moyens de préhension et d'entrainement des bords du film de fermeture (2), de sorte que l'entraînement de chaque barquette entre les deux postes de travail est assuré par la traction exercée sur elle par le film de fermeture ;

- un convoyeur (13) d'entrainement est disposé à l'endroit du poste de découpe (4) ainsi qu'au-delà de celui-ci, pour évacuer chaque barquette de conditionnement (1) hors de la machine après qu'elle ait été séparée du film de fermeture (2) ;

- ces différents moyens d'entrainement étant synchronisés entre eux pour que chaque barquette de conditionnement avance pas à pas et stationne pendant le temps voulu à l'endroit de chaque poste de travail.

2. Machine selon la revendication 1, caractérisée en ce que les moyens de préhension et d'entraînement des bords du film de fermeture (2) consistent, sur chaque côté de cette machine, en une chaine (18) ou similaire qui est fermée sur elle-même et porte une série de moyens d'accouplement mécanique avec les bords correspondants du film.

3. Machine selon la revendication 2, caractérisé en ce que les moyens mécaniques d'accouplement entre les chaines latérales d'entrainement (18) et les bords correspondants du film de fermeture (2) consistent en une série de picots pointus (19) portés par les chaines d'entrainement et qui sont aptes à pénétrer dans les bords du film de fermeture, et en amont du poste de soudure (3), il est prévu un rouleau de pression (16) apte à appliquer les bords du film de fermeture (2) sur les chaînes latérales d'entrainement (18) pour faire pénétrer les picots d'accouplement (19) dans les bords de ce film.

4. Machine selon l'une des revendications 1 et 2, caractérisée en ce que les moyens mécaniques d'accouplement entre les chaines latérales d'entrainement (18) et les bords correspondants du film de fermeture (2) consistent en une série de pinces portées par les chaines d'entrainement et qui sont aptes à saisir les bords de ce film.

5. Machine selon l'une des revendications précédentes, caractérisée en ce que les différents plateaux de glissement (7, 11 et 12) des barquettes de conditionnement ainsi que le convoyeur final (13) d'évacuation sont portés par un châssis (42) monté mobile dans le sens vertical sur le bâti fixe (8) de l'ensemble et il est prévu des moyens de réglage permettant de modifier la position en hauteur de ce châssis mobile en fonction de la hauteur des barquettes de conditionnement dont la fermeture doit être assurée.

0252792

FIG.1

FIG.3

0252792

FIG. 2

Office européen
des brevets

**RAPPORT DE RECHERCHE EUROPEENNE**

Numero de la demande

EP 87 40 1386

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | FR-A-2 137 281 (BELLMANN) <br> * En entier * <br><br> ----- | 1 | B 65 B 7/16 |

DOMAINES TECHNIQUES RECHERCHES (Int. Cl.4)

B 65 B

Le présent rapport de recherche a été établi pour toutes les revendications

| Lieu de la recherche | Date d'achèvement de la recherche | Examinateur |
|---|---|---|
| LA HAYE | 12-10-1987 | CLAEYS H.C.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82